# EUROPEAN PATENT APPLICATION

(11) **EP 1 916 400 A1**
(43) Date of publication of application: **30.04.2008**
(21) Application number: 06425742.1
(22) Date of filing: 27.10.2006
(51) Int. Cl.: F02D 9/10, F02M 35/108, F02B 31/06

(54) **Variable geometry intake manifold with integrated actuator for an internal combustion engine**

(71) Applicant: Magneti Marelli Holding S.p.A., 20011 Corbetta (IT)
(72) Inventor: Fornara, Stefano, 41100 Modena (IT); Lancioni, Federico, 05029 Sangemini (IT); Pecora, Michele, 85100 Potenza (IT)
(74) Representative: Maccagnan, Matteo

(57) **Abstract**

Variable-geometry intake manifold (3) for an internal combustion engine (1); the intake manifold (3) has: at least one intake line (9) that connects the intake manifold (3) to at least one cylinder (2) of the internal combustion engine (1), a choke system (14) for varying the geometry of the intake manifold (3) and including at least one choke valve (15) equipped with a choke body (17), which is placed inside the intake line (9) and is mounted so that it can turn around an axis of rotation (19), and an actuator device (16) for operating the choke valve (15) and including a shell (30), which is hollow inside and composed of a base (35) that is an integral part of a body of the intake manifold (3) and a cover (36) that is coupled to the base (35) via mechanical fastening.

## Description

### TECHNICAL FIELD

The present invention concerns a variable-geometry intake manifold for an internal combustion engine.

### BACKGROUND ART

An internal combustion engine is equipped with a number of cylinders, each of which is connected to an intake manifold via at least one intake valve and to an exhaust manifold via at least one exhaust valve. The intake manifold receives fresh air (or rather air arriving from the external environment) through an induction line equipped with a butterfly valve and is connected to the cylinders via respective intake lines, each of which terminates in correspondence to at least one intake valve.

In modern internal combustion engines, the intake manifold is increasingly of the variable geometry type, or rather, is equipped with a choking device, which varies the air-passage cross-section of the intake lines depending on engine speed (namely the angular speed of rotation of the drive shaft) to increase engine performance, whilst simultaneously reducing pollutant emissions. At low speeds, the air-passage cross-section through the intake lines is decreased in order to generate turbulence in the inducted airflow, which improves the mixing of air and fuel in the cylinders; thanks to the presence of this turbulence that improves mixing, all of the injected fuel is burnt and thus the pollutant emissions generated by combustion are reduced. At high speeds, the air-passage cross-section through the intake lines is maximized in order to allow complete filling of the cylinders and thus permit generation of the maximum possible power.

For example, choking devices of the above-described type can be tumble devices or swirl devices. A tumble device uses a choke body for each intake line that can move between an active (or choking) position, in which the choke body reduces the cross-section of the intake line, and a rest (or maximum opening) position, in which the choke body does not cause any reduction in the air-passage cross-section of the intake line. A swirl system envisages that each intake line comprises two channels and, for each intake line, uses a choke body inserted in one of the two channels that can move between the active position, in which the choke body completely closes the corresponding channel, and a rest (or maximum opening) position, in which the choke body does not cause any significant reduction in the air-passage cross-section of the corresponding channel.

In the choking devices on the market, all of the choke bodies are fitted on a common shaft to turn together to and from the active position under the propulsion of a common actuator device, which is able to control the position of all the choke bodies in a simultaneous and synchronous manner. The actuator device is made independently of the intake manifold and once completed, is mechanically fixed to the intake manifold via mounting clamps or similar. It has been observed that the mechanical connection between the actuator device and the intake manifold involves a relatively long assembly time, as it is necessary to ensure perfect coaxiality between the shaft of the actuator device and the common shaft that operates the choke bodies.

### DISCLOSURE OF INVENTION

The object of the present invention is to provide a variable-geometry intake manifold for an internal combustion engine, this intake manifold being devoid of above-described drawbacks and, in particular, being of straightforward and economic manufacture.

According to the present invention, a variable-geometry intake manifold for an internal combustion engine is provided in accordance with that claimed in the attached claims.

### BRIEF DESCRIPTION OF THE DRAWINGS

The present invention shall now be described with reference to the attached drawings, which illustrate a non-limitative example of embodiment, in which:
- Figure 1 is a schematic view of an internal combustion engine fitted with a variable-geometry intake manifold made in accordance with the present invention and equipped with a swirl-type choke system,
- Figure 2 is a front view of the intake manifold in Figure 1, with parts removed for clarity,
- Figure 3 is a perspective view of a butterfly plate of a choke valve of the choke system in Figure 1,
- Figure 4 is a perspective view of a valve seat of a choke valve of the choke system in Figure 1, with parts removed for clarity,
- Figure 5 is a perspective view of a choke valve of the choke system in Figure 1 in an active or choke position, with parts removed for clarity,
- Figure 6 is a perspective view of a choke valve of the choke system in Figure 1 in a rest or maximum opening position, with parts removed for clarity,
- Figures 7 and 8 are two different perspective views of a rotor of an angular position sensor of the choke system in Figure 1,
- Figure 9 is a frontal view of an angular position sensor of the choke system in Figure 1, with parts removed for clarity,
- Figure 10 is a partially-sectioned perspective view of the intake manifold in Figure 1, with parts removed for clarity,
- Figure 11 is a partially-sectioned perspective view of a detail of the intake manifold in Figure 1, with parts removed for clarity, and
- Figure 12 is a perspective view of an actuator device of the intake manifold in Figure 1, with parts removed for clarity.

### PREFERRED EMBODIMENTS OF THE INVENTION

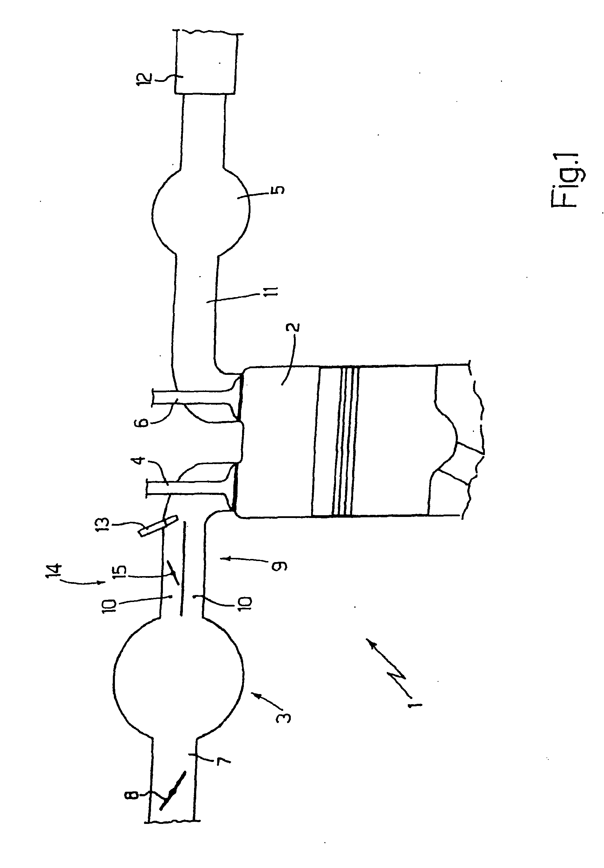

In Figure 1, reference numeral 1 generally designates an internal combustion engine equipped with four cylinders 2 (only one of which is shown in Figure 1), each of which is connected to an intake manifold 3 via two inlet valves 4 (only one of which is shown in Figure 1) and to an exhaust manifold 5 via two exhaust valves 6 (only one of which is shown in Figure 1).

The intake manifold 3 receives fresh air (or rather air arriving from the external environment) through an induction line 7 controlled by a butterfly valve 8 and is connected to the cylinders 2 via respective intake lines 9 (only one of which is shown in Figure 1), each of which includes two channels 10 (possibly of different length and/or shape and/or size) and controlled by the corresponding inlet valves 4. Similarly, the exhaust manifold 5 is connected to the cylinders 2 via respective exhaust lines 11 (only one of which is shown in Figure 1), each of which is controlled by the corresponding exhaust valves 6, and with an exhaust pipe 12 that runs from the exhaust manifold 5 and terminates in a muffler (known and not illustrated) to discharge the gases produced by combustion into the atmosphere.

According to a preferred embodiment, the fuel (for example, petrol, diesel fuel, natural gas or LPG) is injected inside each intake line 9 via a respective injector 13 placed close to the corresponding inlet valves 4. According to a different embodiment, not shown, the injectors 13 are arranged in a manner to inject the fuel directly inside each cylinder 2.

The intake manifold 3 has variable geometry and includes a choke system 14 that, while the engine 1 is running, is able to vary the air-passage cross-section of the intake lines 9 based on the speed of the engine 1 itself. According to the embodiment illustrated in Figure 1, the choke system 14 is of the swirl type and, for each intake line 9, includes a choke valve 15, which is mounted in one of the two channels 10 of the intake line 9 and is able to vary the air-passage cross-section through the same channel 10; in particular, each choke valve 15 can move between an active (or choke) position, in which the choke valve 15 reduces the air-passage cross-section of the intake line 9 by completely closing the respective channel 10, and a rest (or maximum opening) position, in which the choke valve 15 does not cause a significant reduction in the air-passage cross-section of the intake line 9.

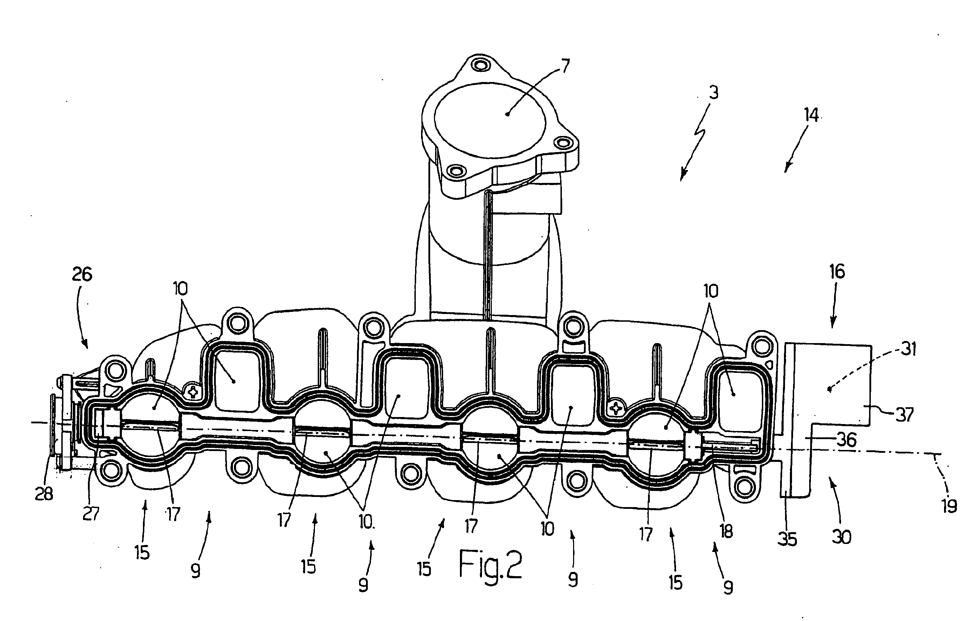

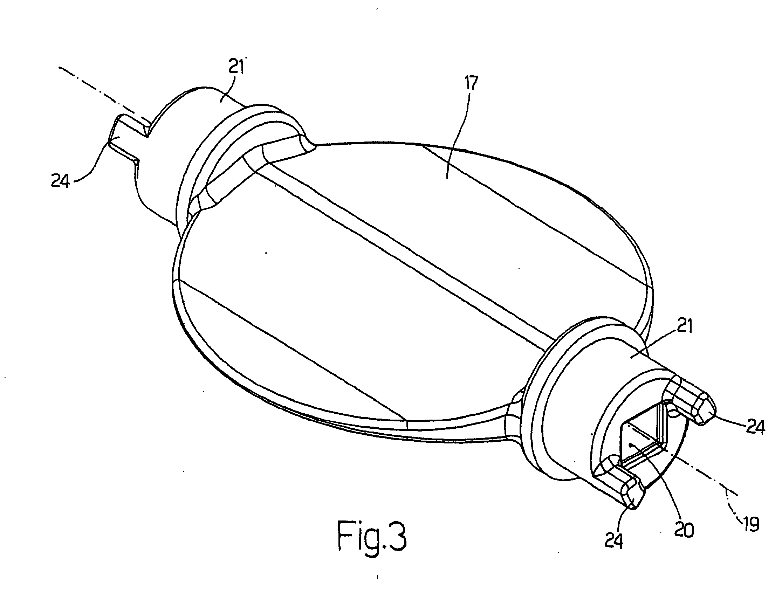

According to that shown in Figure 2, the four choke valves 15 are arranged in line and are operated by a common actuator device 16 (preferably equipped with an electric motor) positioned laterally with respect to a body of the intake manifold 3 and aligned with the four choke valves 15. Each choke valve 15 includes a choke body 17, in particular a butterfly plate 17 (better shown in Figure 3), which is fitted on a common shaft 18 (that is shared with all four choke valves 15) to turn together with the common shaft 18 itself around an axis of rotation 19 and under the propulsion of the actuator device 16 between the active position and the rest position.

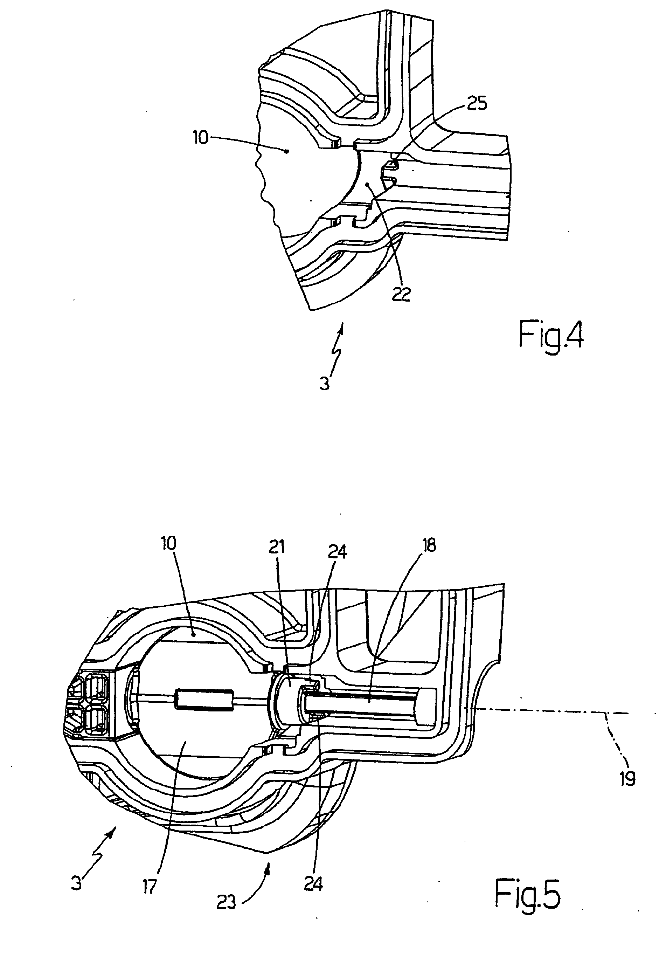

According to a preferred embodiment illustrated in Figure 3, each butterfly plate 17 has a central, square-section through hole 20, through which the common shaft 18 runs; the square-section of the hole 20 allows the butterfly plate 17 to be made angularly integral with the shaft 18 via geometric interference and therefore without the need for further mechanical connections. In addition, two cylindrical extensions 21 are obtained on the opposite sides of each butterfly plate 17 and coaxial with the through hole 20, these being inserted in the respective cylindrical seats 22 (one of which shown in Figure 4) obtained in a valve body of the choke valve 15 to fix the bearings that guide the rotation of the butterfly plate 17 around the axis of rotation 19.

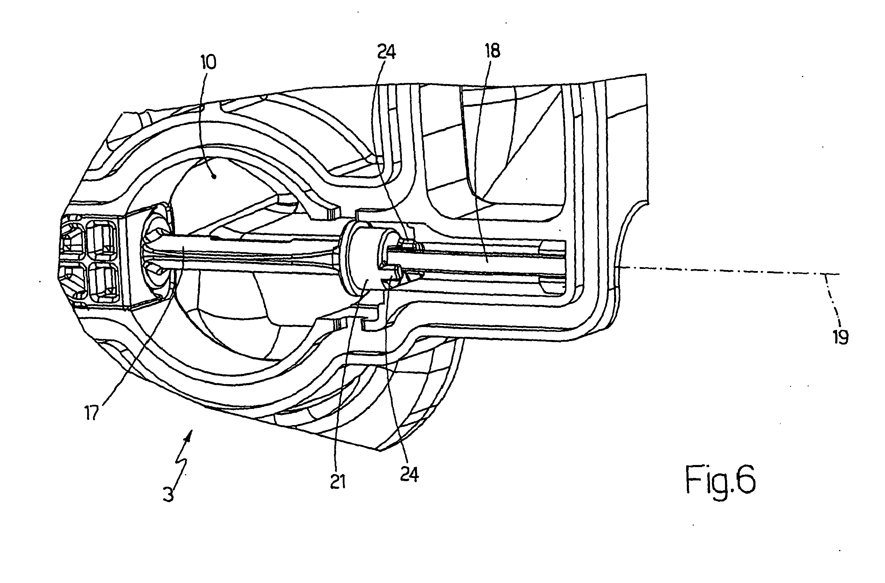

In use, each butterfly plate 17 turns under the propulsion of the actuator device 16 between the active position (shown in Figure 5), in which the air-passage cross-section of the intake line 9 is reduced, and the rest position (shown in Figure 6), in which the air-passage cross-section of the intake line 9 is not reduced in an appreciable manner.

According to that shown in Figures 3, 4 and 5, each choke valve 15 integrates a pair of mechanical end stops 23 within itself that define the positioning of the active position and the rest position respectively. Each end stop 23 includes a stop lug 24, which is mobile, is arranged parallel to and staggered with respect to the axis of rotation 19 and is integral with the butterfly plate 17, and a stop element 25, which is fixed, is integral with a fixed valve body of the choke valve 15 and is positioned along the path of movement of the respective stop lug 24 to stop the movement of the respective stop lug 24 and therefore the butterfly plate 17. Preferably, the stop lugs 24 rise from a cylindrical extension 21 and so the stop elements 25 are obtained on the inside of a cylindrical seat 22. In addition, both of the stop elements 25 are preferably constituted by a single portion of circular crown obtained inside a cylindrical seat 22.

According to a preferred embodiment, each choke valve 15 integrates within itself just one pair of mechanical end stops 23 arranged in correspondence to one of the two cylindrical extensions 21 of the butterfly plate 17. According to a different embodiment, not shown, each choke valve 15 integrates within itself two pairs of mechanical end stops 23 arranged in correspondence to both of the two cylindrical extensions 21 of the butterfly plate 17. According to a further embodiment, not shown, only one of the four choke valves 15 integrates a pair of mechanical end stops 23; however, this embodiment involves greater production costs as it requires the production of two different types of butterfly plate 17 (with the stop lugs 24 and without the stop lugs 24).

According to a different embodiment, not shown, the choke system 14 is of the tumble type; in this case, each intake line 9 comprises a single channel 10 in which a choke valve 15 is placed that can move between the active (or choke) position, in which the choke valve 15 reduces the air-passage cross-section of the intake line 9, and the rest (or maximum opening) position, in which the choke valve 15 does not cause any reduction in the air-passage cross-section of the intake line 9.

According to a further embodiment, not shown, the choke system 14 is of the PDA (Port De-Activation) type.

The above-described choke system 15 is, at the same time, both simple and economic to make, and also particularly precise and in conformity with the design specifications. These results are achieved by integrating the mechanical end stops 23 inside the choke valves 15 and, in particular, by integrating the mechanical end stops 23 in the butterfly plates 17. In this way, even with not particularly precise construction methods (therefore simple and inexpensive) it is possible to establish the effective placement of the active and rest positions with sufficient precision.

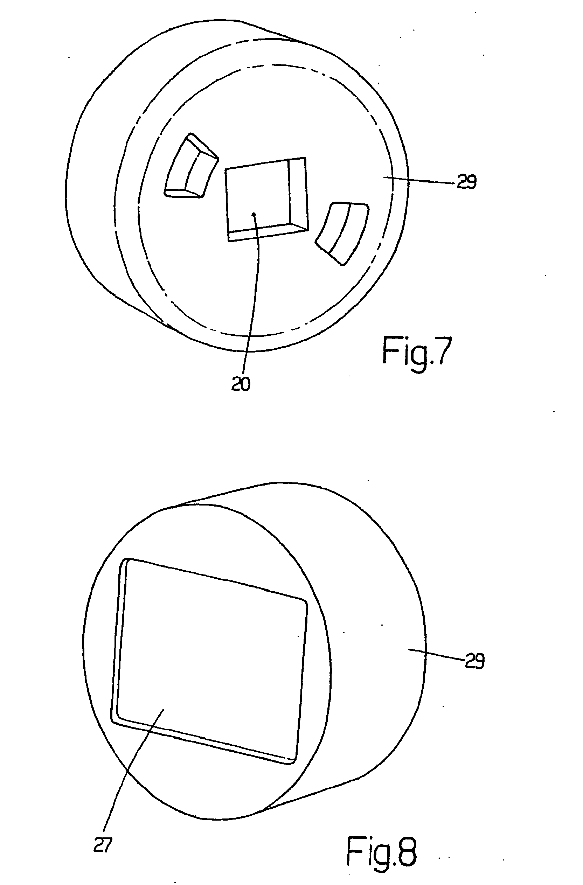

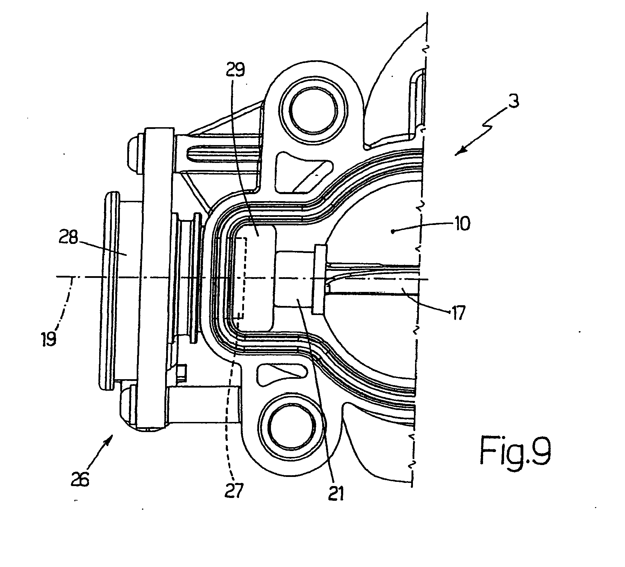

According to that shown in Figures 7, 8 and 9, the choke system 14 includes an angular position sensor 26 coupled at one end to the common shaft 18 and arranged on the opposite side from the actuator device 16 to determine the angular position of the common shaft 18 around the axis of rotation 19. It is important to note that the position sensor 26 is coupled to the choke valve 15 furthest away from the actuator device 16, as this choke valve 15 is placed in the last position of the mechanical transmission that transmits motion from the actuator device 16 and is therefore the one most likely to be subject to possible mechanical problems.

The angular position sensor 26 comprises a square-section permanent magnet 27 integral with the common shaft 18, and a reader 28, which is of the magnetoresistive type and able to read the orientation of the permanent magnet 27, and is placed outside the intake line 9 close to a wall of the same intake line 9 and close to the permanent magnet 27. Preferably, the permanent magnet 27 is buried (preferably via insert moulding) in a cylindrical cradle 29, which is coupled to the butterfly plate 17 of the choke valve 15; to this end, the cylindrical cradle 29 has a pair of holes that are suitable for being engaged by the stop lugs 24 of the butterfly plate 17, which in this case are not used as part of the end stop, but as mechanical coupling members for the cradle 29.

The use of the above-described angular position sensor 26 provides numerous advantages in so far that this angular position sensor 26 is economic, is quick and easy to mount and has a high precision of measurement. In particular, the mounting of the angular position sensor 26 is quick and easy because the reader 28 of the angular position sensor 26 is positioned on the outside of the intake line 9 and therefore no type of drilling is necessary on the intake line 9; in addition, it is simple and immediate to carry out checks, maintenance or substitution of the reader 28 of the angular position sensor 26 even when the intake manifold 3 is mounted on the engine 1.

The above-described angular position sensor 26 does not introduce any type of friction on the rotation of the common shaft 18 because the reader 28 of the angular position sensor 26 is of the contactless type and therefore mechanically independent from the permanent magnet 24, and because the presence of a dynamic or static sealing ring coupled to the common shaft 18 is not required.

Lastly, the above-described angular position sensor 26 reads the effective position of the butterfly plates 17 directly and is therefore able to detect if a butterfly plate 17 is no longer driven by the actuator device 16 due to a mechanical problem.

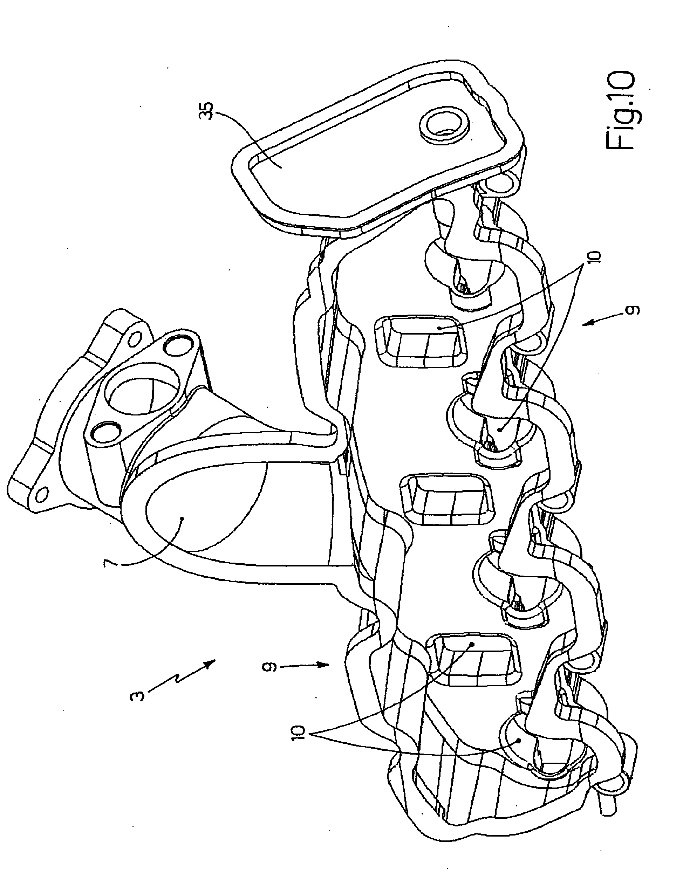

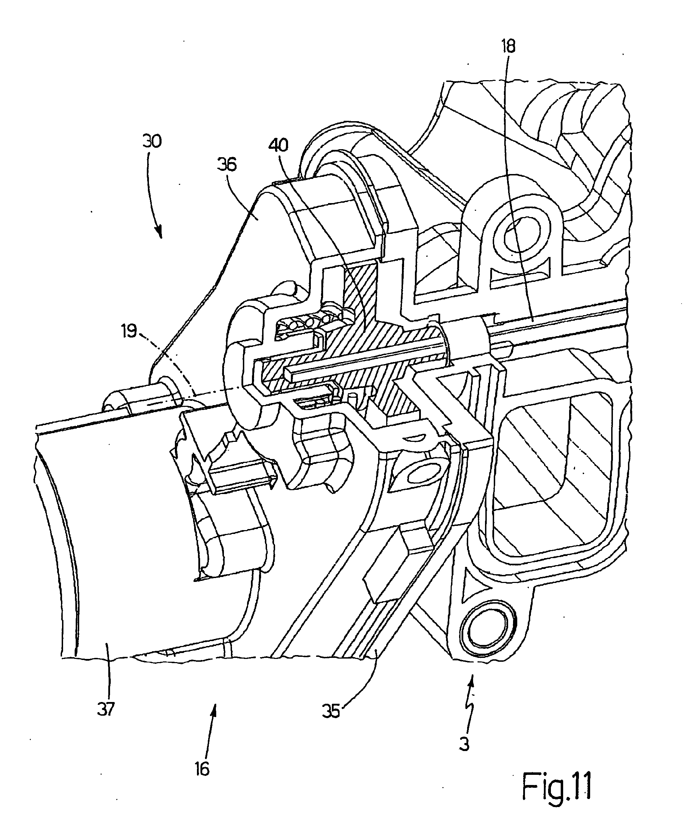

According to that shown in Figures 10, 11 and 12, the actuator device 16 comprise a shell 30, which is rigidly connected to the body of the intake manifold 3 and is internally hollow so as to define a chamber 31 within itself. The inside the chamber 31 of the shell 30 houses an electric motor 32 and a gear transmission 33, having a reduction gear effect (or rather, reduction of angular velocity and increase in driving torque), which transmits the movement of a shaft 34 of the electric motor 32 to the common shaft 18 of the choke system 14.

The shell 30 is composed of a base 35, which is integral with and forms part of the body of the intake manifold 3, and a cover 36, which is joined to the base 35 via mechanical fastening (via screws or clamping for example). A gasket can be inserted between the base 35 and the cover 36 to increase the sealing of the chamber 31. Normally, the electric motor 3 has a cylindrical shape and is placed in a tubular housing 37 that rises perpendicularly from the cover 36.

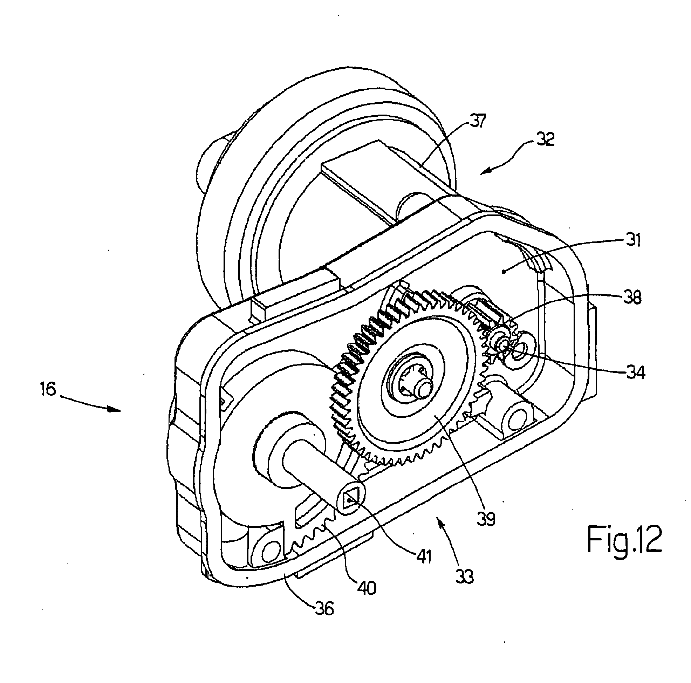

According to the preferred embodiment illustrated in Figure 12, the gear transmission 33 includes an initial cogwheel 38, which is integral with the shaft 34 of the electric motor 32 and engages with an idle-mounted intermediate cogwheel 39. In turn, the intermediate cogwheel 39 engages with a final cogwheel 40, which has a central seat 41 suitable for being rigidly coupled to one end of the common shaft 18 of the choke system 14. Preferably, the seat 41 is defined by a square-section through hole, through which the common shaft 18 is passed; the square section of the hole allows the final cogwheel 40 to be made angularly integral with the shaft 18 via geometric interference, and therefore without the need for further mechanical connections.

According to a preferred embodiment, the final cogwheel 40 has a toothed crown limited by a circular sector having an excursion of approximately 90°. In addition, the intermediate cogwheel 39 has an external toothed crown that engages with the initial cogwheel 38 and an internal toothed crown (not shown) that engages with the final cogwheel 40 and has a smaller diameter that the external toothed crown.

The electric motor 32 and the gear transmission 33 are assembled and inserted inside the cover 36 during the assembly of the actuator device 16; subsequently, the cover 36 carrying the electric motor 32 and the gear transmission 33 is coupled to the base 35, integral with the body of the intake manifold 3.

It is important to underline that the actuator device 16 is directly connected head-on to the common shaft 18 without the interposition of further mechanical transmissions.

Thanks to the fact that the base 35 is an integral part of the body of the intake manifold 3, or rather, it is made together with the body of the intake manifold 3 by pressing, the fixing of the actuator device 16 to the body of the intake manifold 3 is straightforward, immediate and very precise. In addition, any maintenance or repair operation on the actuator device 16 is very quick and simple, as it is sufficient to separate the cover 36 from the base 35 to be able to work unhampered both on the gear transmission 33 and on the electric motor 32.

It is important to note that the actuator device 16 does not internally incorporate a position sensor, as the signal supplied by the position sensor 26, which is coupled to the end of the common shaft 18 opposite to that on which the actuator device 16 is fitted, is used for the feedback piloting of the actuator device 16. In this way, the position sensor 26 can be used both for feedback piloting of the actuator device 16 and for checking that the motion imparted by the actuator device 16 correctly reaches all of the common shaft 18, or rather all of the choke valves 15, in accordance with that required by international regulations.

## Claims

1. Variable-geometry intake manifold (3) for an internal combustion engine (1), the intake manifold (3) comprising:
at least one intake line (9) that connects the intake manifold (3) to at least one cylinder (2) of the internal combustion engine (1),
a choke system (14) for varying the geometry of the intake manifold (3) and including at least a choke valve (15) equipped with a choke body (17), which is arranged inside the intake line (9) and mounted such that it can turn around an axis of rotation (19), and
an actuator device (16) for operating the choke valve (15) and including a shell (30), which is hollow inside and is composed of a base (35) and a cover (36) that is coupled to the base (35) via mechanical fastening;
the intake manifold (3) is **characterized in that** the base (35) is integral and forms part of a body of the intake manifold (3).

2. Intake manifold (3) according to claim 1, wherein the actuator device (16) includes an electric motor (32) and a gear transmission (33) that transmits the movement of a shaft (34) of the electric motor (32) to a shaft (18) of the choke system (14).

3. Intake manifold (3) according to claim 2, wherein the electric motor (3) has a cylindrical shape and is placed inside a tubular housing (37) that rises perpendicularly from the cover (36).

4. Intake manifold (3) according to claim 2 or 3, wherein the gear transmission (33) comprises:
an initial cogwheel (38), which is integral with the shaft (34) of the electric motor (32),
a final cogwheel (40), which has a central seat (41) suitable for being rigidly coupled to an end of the shaft (18) of the choke system (14), and
an idle-mounted intermediate cogwheel (39) that engages with the initial cogwheel (38) and with the final cogwheel (40).

5. Intake manifold (3) according to claim 4, wherein the seat (41) of the final cogwheel (40) is defined by a square-section through hole, through which the shaft (18) of the choke system (14) is passed.

6. Intake manifold (3) according to claim 4 or 5, wherein the final cogwheel (40) has a toothed crown limited by a circular sector.

7. Intake manifold (3) according to claim 4, 5 or 6, wherein the intermediate cogwheel (39) has an external toothed crown that engages with the initial cogwheel (38) and an internal toothed crown that engages with the final cogwheel (40) and has a smaller diameter than the external toothed crown.

8. Intake manifold (3) according to one of claims 1 to 7, wherein the choke valve (15) integrates within itself a pair of mechanical end stops (23), which determine the respective positioning of an active position and of a rest position of the choke body (17).

9. Intake manifold (3) according to claim 8, wherein each end stop (23) includes a stop lug (24), which is mobile, is arranged parallel to and staggered with respect to the axis of rotation (19) and is integral with the choke body (17), and a stop element (25), which is fixed, is integral with a fixed valve body of the choke valve (15) and is positioned along the path of movement of the respective stop lug (24) to stop the movement of the respective stop lug (24) and therefore the choke body (17).

10. Intake manifold (3) according to claim 9, wherein two cylindrical extensions (21) are obtained on opposite sides of the choke body (17), these being inserted in the respective cylindrical seats (22) obtained in a valve body of the choke valve (15) to fix the bearings that guide the rotation of the choke body (17) around the axis of rotation (19).

11. Intake manifold (3) according to claim 10, wherein the stop lugs (24) rise from a cylindrical extension (21) and the stop elements (25) are obtained on the inside of a cylindrical seat (22).

12. Intake manifold (3) according to claim 11, wherein the two stop elements (25) of the two end stops (23) are constituted by a single portion of circular crown obtained inside a cylindrical seat (22).

13. Intake manifold (3) according to one of claims 1 to 12, wherein a number of intake lines (9) are contemplated together with a number of respective choke valves (15), which are arranged in line and are operated by a common actuator device (16) positioned laterally with respect to a body of the intake manifold (3) and aligned with the choke valves (15).

14. Intake manifold (3) according to claim 13, wherein each choke valve (15) includes a choke body (17), which is fitted on a common shaft (18) to turn together with the common shaft (18) itself around an axis of rotation (19) and under the propulsion of the actuator device (16) between the active position and the rest position.

15. Intake manifold (3) according to claim 14, wherein a drive shaft of the actuator device (16) is coaxial with the axis of rotation (19) and is directly connected head-on to the common shaft (18).

16. Intake manifold (3) according to claim 14 or 15, wherein each choke body (17) has a central, square-section through hole (20), through which the common shaft 18) is passed.

17. Intake manifold (3) according to one of claims 13 to 16, wherein each choke valve (15) integrates a pair of mechanical end stops (23) within itself.

18. Intake manifold (3) according to one of claims 1 to 17, wherein the choke system (14) is of the swirl type; the intake line (9) has two channels (10), one of which is engaged by the choke valve (15) to vary the air-passage cross-section through the same channel (10).

19. Intake manifold (3) according to one of claims 1 to 18, wherein the choke system (14) is of the tumble type; the intake line (9) includes a single channel (10) in which a choke valve (15) is placed.

20. Intake manifold (3) according to one of claims 1 to 19, wherein the choke system (14) includes an angular position sensor (26) that determines the angular position of the common shaft (18) around an axis of rotation (19) for the feedback piloting of the actuator device (16).

21. Intake manifold (3) according to claim 20, wherein the position sensor (26) is coupled at the end of the common shaft (18) opposite to the end on which the actuator device (16) is fitted.

22. Intake manifold (3) according to claim 20 or 21, wherein the angular position sensor (23) comprises:
a permanent magnet (27) fixed to the shaft (16), and
a reader (28), which is able to read the orientation of the permanent magnet (27) and is placed outside the intake line (9) close to a wall of the same intake line (9) and close to the permanent magnet (27).
